# EUROPEAN PATENT APPLICATION

(11) **EP 1 277 677 A1**
(43) Date of publication of application: **22.01.2003**
(21) Application number: 01830487.3
(22) Date of filing: 20.07.2001
(51) Int. Cl.: B65G 51/03, B65G 21/20

(54) **Guide postioner for a conveyor**

(71) Applicant: Rexnord Marbett S.p.A., 42015 Correggio (Reggio Emilia) (IT)
(72) Inventor: Andreoli, Andrea, 41010 Villanova (MO) (IT); Bellini, Emanuele, 41037 Mirandola (MO) (IT)
(74) Representative: Maccalli, Marco

(57) **Abstract**

An actuator for the selective positioning of transport guides in conveyors includes a cylinder-piston assembly (**122**) operated by a fluid in pressure with a stem (**124**) operatively coupled (**125,126,127,128**) to a transport guide (**119**) for the positioning thereof in dependence of the extension of the stem. The cylinder-piston assembly includes: a cylinder (**131**) having at least a first and a second chambers (**132,133**) in axial succession; means (**145,146**) for selectively feeding fluid in pressure into the at least two chambers; a telescopic piston (**139**) comprising a first piston element (**140**) integral with the stem and at least a second piston element (**142**) telescopically coupled to the first piston element. The first and second piston elements are jointly axially movable between a first position and a second position in presence of a first differential thrust exerted on the piston by the fluid in pressure in the first chamber in comparison to the second chamber or vice versa, the first and second positions corresponding to a first and a second extensions of the stem. The first piston element is movable axially with respect to the second piston element between the second position and, a third position in presence of a second differential thrust exerted on the piston by the fluid in pressure in the first chamber in comparison to the second chamber or vice versa, the third position corresponding to a third extension of the stem.

## Description

The present invention relates in general to the field of conveyors of articles, particularly but not limitatively pneumatic conveyors, for instance of the type employed for transporting plastic, typically polyester, bottles from a station of production of the bottles to a station of filling of the same. More specifically, the invention relates to an actuator for the selective positioning of transport guides of a conveyor, *e.g.* for the positioning of the lateral guides of a pneumatic conveyor of bottles.

The use of pneumatic conveyors of bottles of polyester is known for the transport of the bottles from a station of production thereof, constituted by a station of blow moulding, to a following station of filling of the bottles with the desired liquids, for instance drinks.

Such pneumatic conveyors include a chamber run through by a high-speed air flow. The chamber extends along a transport path of the bottles, for sections of typical length equal to thirty, forty or even fifty meters.

The chamber is open at the bottom and it is adapted to receive therein the terminal portion of the neck of the bottles. The high-speed air flow that runs through the chamber, striking the terminal portion of the neck of the bottles, imparts thereto a constant thrust in the desired direction, determining the movement of the bottles along the transport path.

In such a movement the bottles are supported by a pair of support guides. The support guides are placed in correspondence of the bottom opening of the chamber and extend parallelly one in front of the other along the transport path. Such support guides act as supports for a support collar projecting from the terminal portion of the neck of every bottle. The bottles are therefore transported by the air flow while being hung to the support guides through the respective support collars.

It is important that, in the movement along the transport path, the bottles are maintained in substantially vertical position. This in fact allows to avoid that, because of huntings of the bottles, especially in correspondence of curvilinear sections of the transport path, the support collar stops on the support guides causing undesired stops of the bottle and, consequently, of the whole train of following bottles.

In order to assure that the bottles are maintained in substantially vertical position, a pair of lateral guides is provided for. The lateral guides extend parallelly to each other along the transport path, at a lower height with respect to the two support guides. In particular, the two lateral guides are positioned at a height corresponding to the substantially cylindrical portion of maximum diameter of the bottles.

The two lateral guides are generally constituted by bars of metallic or synthetic material, supported by clamps arranged in longitudinal periodic succession along the guides, for instance at regular intervals of about 50 cm. The clamps are provided with tangs which allow the attachment thereof to respective supports, mounted on brackets which, being fixed to the chamber, extend downwards.

To perform their function, the two lateral guides have to be kept in contact with, or at least they have to graze, the bottle bodies. This imposes that the position of the two lateral guides transversally to the transport path could be adjusted, so as to allow the transport of bottles of different diameters, for instance bottles of 1 litre, of 1.5 litres and of 2 litres.

To this purpose, the coupling of the clamp tangs to the respective supports is manually adjustable by loosening screws or similar tightening means: by acting on such screws loosening them, the tang of the clamp is released. Making then the clamp tang slide relative to the respective support, it is possible to vary the position of a section of the lateral guide.

In order to vary the position of the lateral guides the intervention of one or more operators is necessary, which have to adjust the position of every support clamp of the guides. This operation is complicated and extremely long, especially considering that in a transport line of about 50 m the number of clamps supporting the guides is of the order of some hundreds. The time required to complete the operation, that is actually a dead time for the transport line, impacts in non-negligible way on the overall manufacturing cost.

As far as the Applicant is aware, a conveyor of plastic bottles has been proposed in which the adjustment of the position of the lateral guides is not manual, but instead entrusted to pneumatic actuators, each of which associated with a respective guide support clamp. Since three are the different positions that the lateral guides need to assume, corresponding to the above-mentioned three different main typologies of bottles, each actuator is composed of a pair of pneumatic cylinder-piston assemblies, put in series to each other: the stem of the piston of a first cylinder-piston assembly brings at one free end thereof the support clamp of the guide and the cylinder of such first cylinder-piston assembly is mounted on a free end,of the piston stem of the second cylinder-piston assembly.

Clearly such a solution, albeit eliminating the necessity of a manual intervention for the adjustment of the positions of the guides and therefore reducing the dead times of the transport line, has a significant impact on the general conveyor cost, and significantly increases the complexity thereof.

In view of the state of the art described, it has been an object of the present invention to provide a new actuator for the selective positioning of transport guides in conveyors of articles, particularly adapted to the use in pneumatic conveyors of plastic bottles.

According to the present invention, an actuator is therefore provided for the selective positioning of transport guides in conveyors, comprising a cylinder-piston assembly actuated by a fluid in pressure, with a stem operatively associated with a transport guide for the positioning thereof in at least three positions, depending on the extension of the stem.

The cylinder-piston assembly includes a cylinder having at least a first and a second chambers in axial succession, means for selectively feeding fluid in pressure into said at least two chambers, and a telescopic piston comprising a first piston element integral with the stem and at least a second piston element telescopically associated with the first piston element.

The first and the second piston elements are jointly axially movable between a first position and a second position in presence of a first differential thrust exerted on the piston by the fluid in pressure in the first chamber with respect to the second chamber or vice versa, the first and second positions corresponding to a first and a second extensions of the stem. Furthermore, the first piston element is axially movable with respect to the second piston element between the second position and a thirds position in presence of a second differential thrust exerted on the piston by the fluid in pressure in the first chamber with respect to the second chamber or vice versa, the third position corresponding to a third extension of the stem.

According to a possible embodiment, the second piston element has a surface exposed to the fluid in pressure in the first chamber, and the first piston element has a first surface exposed to the fluid in pressure in the second chamber and a second surface exposed to the fluid in pressure in the first chamber. The surface exposed to the fluid in pressure in the first chamber of the second piston element is larger than the first surface exposed to the fluid in pressure in the second chamber of the first piston element, which is in turn larger than the second exposed surface of the first piston element.

Thanks to this, the first differential thrust can be determined by feeding fluid at the same pressure into the first and the second chambers for the joint movement of the first and the second piston elements from the first position to the second position, or by feeding fluid in pressure into the second chamber but not into the first chamber for the joint movement of the first and second piston elements from the second to the first position.

Similarly, the second differential thrust can be determined by feeding fluid in pressure into the first chamber but not into the second chamber for the movement of the first piston element from the second to the third position, or by feeding fluid at the same pressure into the first and the second chambers for the movement of the first piston element from the third position to the second position.

The first, second and third positions can be defined by respective first, second and a third stop means.

In particular, the second stop means include a shoulder between the first and the second chamber.

In a possible embodiment, the first chamber has a diameter larger than that of the second chamber, and the shoulder is defined by the difference of diameter between the first and the second chambers.

The first piston element can be mounted onto the stem, and the second piston element can be coaxial to the first piston element.

In such a case, the second piston element preferably includes a first portion of diameter substantially correspondent to the diameter of the second chamber, and a second portion of diameter substantially correspondent to that of the first chamber, the second portion being adapted to abut against the shoulder to determine the stop in the second position.

The first piston element preferably includes a portion of diameter substantially correspondent to the diameter of the second chamber and adapted to abut against an edge of the first portion of the second piston element for stopping the movement from the third position to the second position.

The actuator can further include a clamp for the fixing of the actuator to the conveyor. The cylinder-piston assembly is preferably joined to the clamp by means of an articulated joint.

The stem of the cylinder-piston assembly can be associated with the transport guide by means of a transmission stem. The clamp preferably includes a guide sleeve for guiding the transmission stem.

Still according to the present invention, a conveyor of articles is provided, comprising at least a transport guide for guiding the articles along a transport path, and means of selective positioning of the transport guide depending on the spatial conformation of the transported articles. The means of selective positioning comprises at least an actuator according to the present invention.

The conveyor preferably includes a plurality of said actuators, arranged along the transport path, and at least a control unit for the plurality of actuators.

Furthermore, and still according to the present invention, a pneumatic conveyor of plastic bottles is provided, comprising means for the pneumatic transport of the bottles in suspension along a transport path, at least a pair of transport guides for keeping the bottles in substantially vertical position in the movement along the transport path, and means for the selective positioning of the pair of transport guides. The means of selective positioning comprises, for each guide of the pair of transport guides, a plurality of actuators in accordance with the present invention.

In such a conveyor, the means of pneumatic transport in suspension of the bottles may include a pair of support guides for a suspension collar provided on the neck of the bottles. Should there be the necessity of adjusting the position of the support guides, means could advantageously be provided for the selective positioning of the pair of support guides comprising at least an actuator in accordance with the present invention.

The features and advantages of the present invention will be made evident by the following detailed description of some possible practical embodiments thereof, provided merely by way of non-limitative examples and illustrated in the annexed drawings, wherein:
Figure 1 is an axonometric view from below of a section of a conveyor according to a possible embodiment of the present invention, particularly a pneumatic conveyor of plastic bottles;
Figure 2 is a sectional view of the conveyor of Figure 1 along a transversal plane thereof;
Figure 3 is a view similar to that of Figure 2, and shows the use of the conveyor for transporting bottles of greater dimensions with respect to those shown in Figure 2;
Figures 4, 5 and 6 are sectional views of a cylinder-piston assembly of an actuator in accordance with a possible embodiment of the present invention, employed in the conveyor of Figure 1, in three different operating positions, and
Figure 7 is a view similar to that of Figure 2 of a conveyor according to another possible embodiment of the invention.

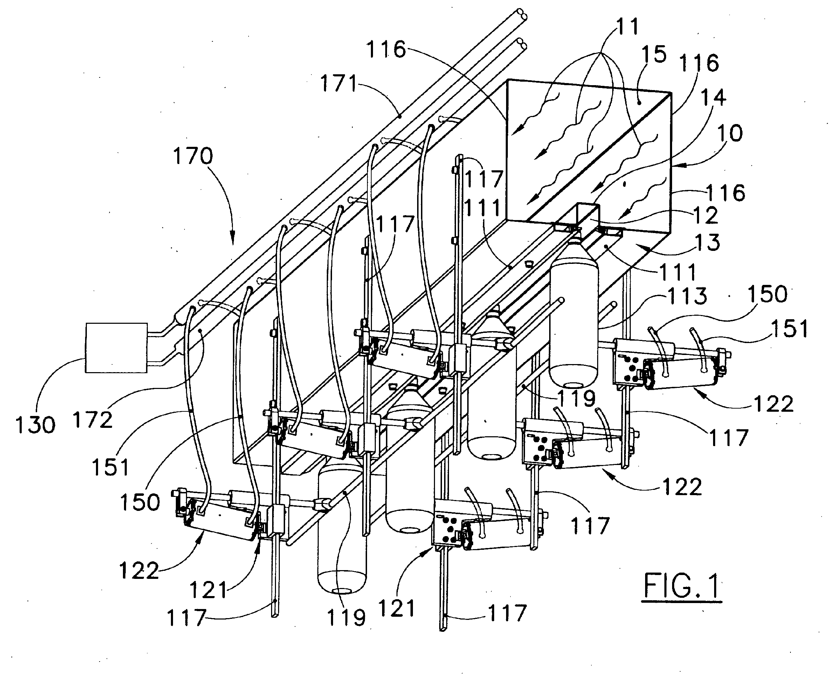

With reference to the drawings, a section of a pneumatic conveyor for the transport of plastic bottles, for instance in polyester, is shown in Figure 1 in axonometric view from below. The conveyor is for example part of a more complex production line, 'comprising a station of manufacture of the bottles, typically a station of blow moulding, and a station of filling of the bottles with the prescribed liquids, for instance drinks. The conveyor has therefore the function of transporting the bottles coming out from the manufacture station to the filling station.

The conveyor includes a box-shaped casing **10**, in the shown example having generically rectangular transversal cross-section, that extends along a transport path of the bottles. The casing **10** defines at the interior thereof a duct **15**. The duct **15** is run through by a flow of air **11** at high pressure, for instance generated by one or more electro-fans, not shown in the drawings, arranged in correspondence of an end of the duct **15** of the transport path.

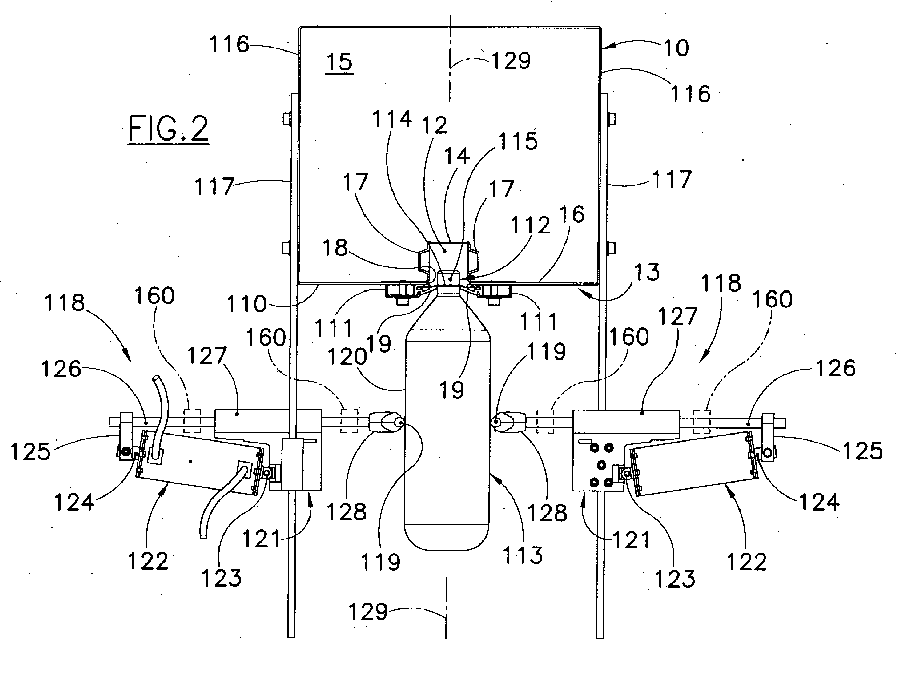

Inside the casing **10** a chamber **12** is provided, of substantially smaller dimensions. The chamber **12** extends, in correspondence of the bottom wall **13** of the casing **10**, for the whole transport path. As better visible in Figure 2, the chamber **12** is delimited laterally and above by a profiled section **14** attached to the inner side 16 of the bottom wall **13**.

Along the profiled section **14** collectors **17** are formed that allow the flow of air **11** running through the duct **15** to penetrate into the chamber **12**. The chamber **12** results, in such a way, run through by a flow of air at high speed.

In the bottom wall **13** of the casing **10,** substantially in the central position thereof, an opening **18** is formed that extends along the whole transport path. The profiled section **14** is attached to the bottom wall **13** of the casing **10** in correspondence of such an opening **18**, so that the chamber **12** results open at the bottom. To each one of the two major sides of the opening **18** there is associated a respective support guide **19**, that extends for the whole transport path. The support guides **19** are mounted on the outer side **110** of the bottom wall **13** through respective brackets **111**.

The two support guides **19** define there between a gap of dimensions adapted to the passage without interference of necks **112** of transported bottles **113,** at the same time providing a support for a support collar **114** projecting from the neck **112** of every bottle **113**. The support collar **114** is conventionally formed in intermediate position along the neck **112** of the bottle, so that a terminal portion **115** of the neck extends inside the chamber **12** and is stroke by the high-speed air flow running through the chamber **12.**

The bottles **113** are in such way transported along the transport path suspended to the support guides **19** through the respective support collars **114**, by means of the high-speed air flow that runs through the chamber **12** and that strikes the respective terminal portions **115** of the necks **112**.

To each side wall **116** of the casing **10** a respective plurality of bars **117** is attached, preferably arranged in periodic succession along the transport path. The bars **117** extend downwards of the casing **10** and each of them provides a support for respective means, altogether identified with **118,** for the support and the positioning of a pair of bars **119**, in metal or in synthetic material or other suitable material, extending parallelly to' each other along the transport path at a lower height with respect to the support guides **19**, particularly at a height corresponding to that at which the substantially cylindrical portion **120** of maximum diameter of the bottles **113** is found. The two bars **119** form lateral transport guides and mainly have the function of maintaining the bottles **113** substantially vertical in their movement along the transport path, preventing huntings especially in correspondence of curvilinear sections of the transport path.

The means **118** of support and positioning of the lateral guides **119** include a clamp **121** for the anchorage to the respective bar **117**. A cylinder-piston assembly **122** operated by a fluid in pressure, for instance of the hydraulic or preferably pneumatic type, is articulated to the clamp **121** through a universal joint **123** or other coupling suitable to allow the movement in two orthogonal planes. A stem **124** of the piston of the cylinder-piston assembly **122** is hinged, at one free end thereof, to an end of a joint **125** mounted in turn on a first end of a transmission stem **126.** The transmission stem **126** is slidably supported by a sleeve **127** formed in the clamp **121** so as to extend substantially perpendicularly to the respective bar **117**. A clamp **128**, to which the lateral guide **119** is attached, is mounted to the second end of the stem **126.**

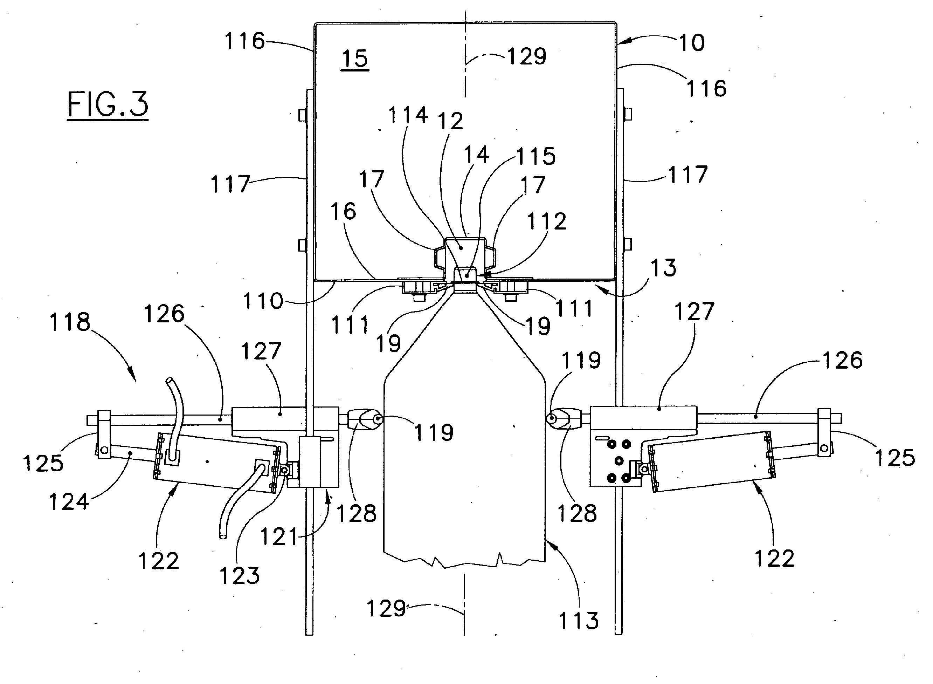

As will be described in detail in the following, the cylinder-piston assembly **122** has at least three operating positions, two of which are by way of example shown in Figures 2 and 3. In particular, in Figure 2 the operating position is shown in which the stem **124** of the piston is completely retracted. In such a case, the associated lateral transport guide **119** is in the position of maximum proximity to the median vertical plane **129** of the conveyor, a position adapted to maintain in substantially vertical position bottles of small diameter, for instance of the capacity of 1 litre. In Figure 3 the position of maximum extension of the stem **124** is shown, that corresponds instead to a position in which the guide **119** is maximally moved away from the median plane **129**, this position being adapted to maintain in substantially vertical position bottles of great diameter, for instance of the capacity of 2 litres.

The articulated coupling of the cylinder of the cylinder-piston assembly to the clamp **121** through the joint **123** allows the movement of the cylinder both in a vertical plane and in a horizontal plane, to compensate possible skews of the sleeve **127**, and in combination with the hinging of the end of the stem **124** to the joint **125** introduces the necessary degrees of freedom so that the stem **124** is exclusively subject to compressive stress, for the correct operation of the actuator.

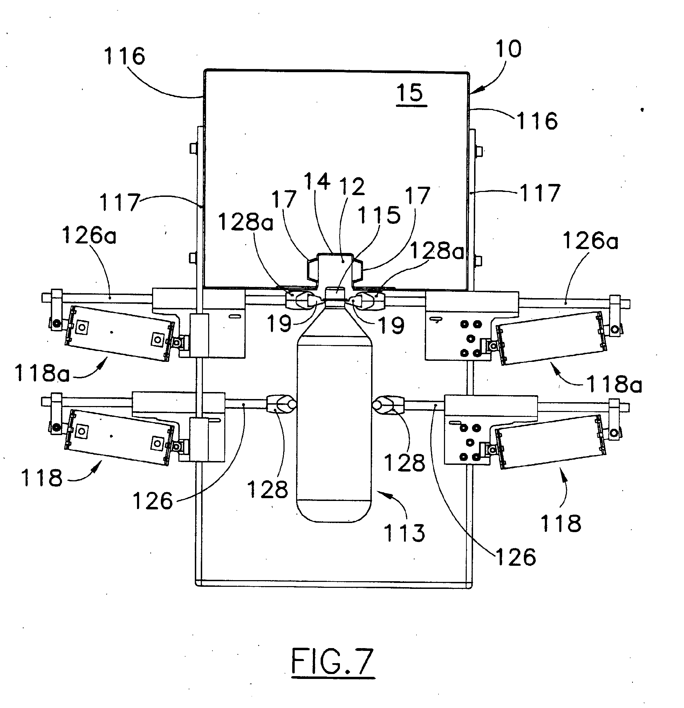

In a possible embodiment the bars **117** attached to one of the side walls **116** of the casing **10** are aligned with the bars **117** attached to the other side wall **116**. The pairs of bars can be joined in correspondence of their bottom ends through respective crossbars, as shown in Figure 7, for a greater stiffness.

All the cylinder-piston assemblies **122** associated with the bars **117** are preferably subjected to the control of a same command unit, represented very schematically in Figure 1 and identified therein with **130** that, through a system of pipes **170**, selectively feeds the cylinder-piston assemblies with fluid in pressure, for instance air. The cylinder-piston assemblies **122** are connected to the unit **130** in parallel to each other. In the exemplary embodiment of the cylinder-piston assembly that will be described in detail in the following, in which two feed inputs of fluid in pressure are provided, the system of pipes **170** comprises two dorsal pipes **171, 172** that are selectively fed with fluid in pressure by the command unit **130** and that extend along the transport path. In correspondence of each cylinder-piston assembly **122**, a pair of ducts **150, 151** put the cylinder in fluid communication with the dorsal pipes **171** and **172**, respectively. The driving of all the cylinder-piston assemblies **122** is simultaneous, so that the two lateral transport guides **119** are simultaneously brought in the respective prescribed positions.

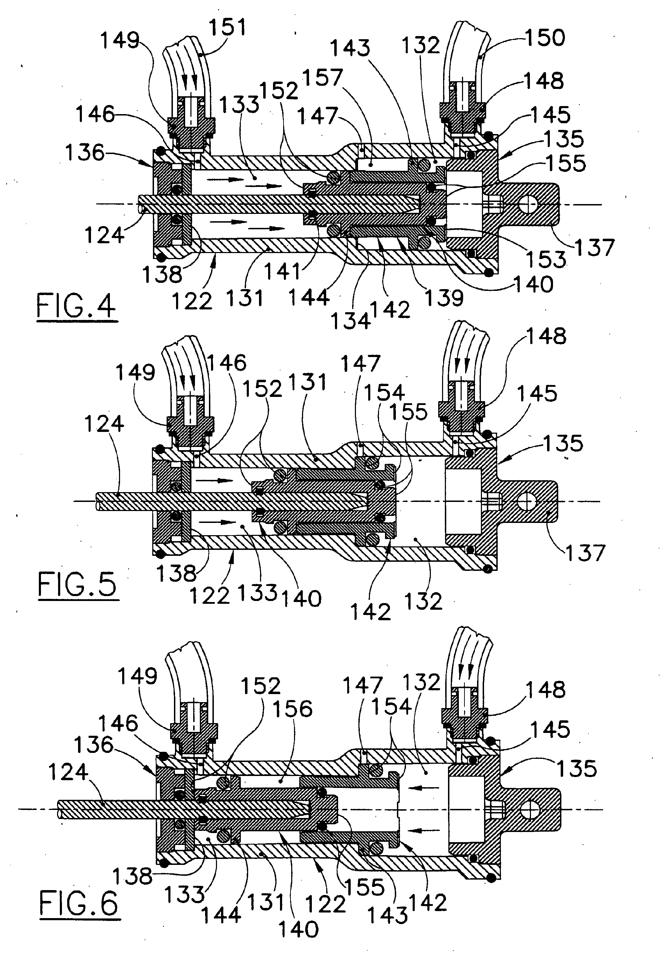

Figures 4, 5 and 6 are views of one of the cylinder-piston assemblies **122** sectioned along an axial plane thereof, in its three different operating positions. A first and a second chambers **132, 133** are formed inside a body **131** of generically cylindrical shape constituting the cylinder. Both the chambers **132, 133** are cylindrical but have different diameter, the first chamber **132** having a diameter higher than that of the chamber **133**. Between the first and the second chambers **132, 133** an annular shoulder **134** is formed. The cylindrical body **131** is provided, at the two ends thereof, with closure elements **135, 136**, respectively back and front. The back closure element 135 has an external flange **137** with a hole for the coupling to the joint **123** and therefore to the clamp **121.** The front closure element **136** has a central hole for the passage of the stem **124**, and associated therewith is a stop ring **138** placed within the second chamber **133**. Conventional rings "O-ring" assure the seal between the front and back closure elements and the cylinder, and between the front closure element and the stem.

Inside the cylinder **131** a piston **139** is slidably housed. The piston **139** is telescopic and is composed of two coaxial elements. A first element **140** is directly mounted on the stem **124** and translates integrally with the latter. This is for instance obtained through a ring **141** housed within a circumferential groove of the stem **124** and projecting within a circumferential groove formed in the inner wall of the element **140**. A second element **142** of the piston **139** is formed by a bushing slidably mounted on the first element **141**. This last is provided at the front thereof with an annular projection **144**, for instance of diameter corresponding to the diameter of the second chamber **133** of the cylinder, adapted to act as a stop for the bushing **142**. The bushing **142** has an external diameter substantially correspondent to the diameter of the second chamber **133** of the cylinder, and has an annular projection **143** adapted to abut against the shoulder **134**, that thus acts as a stop for the bushing in the movement toward the front of the cylinder **131.** The bushing **142** ends at the back thereof with a flanged surface **153** adapted to abut against the back closure element **135**, which thus acts as a stop for the bushing movement toward the back of the cylinder **131**.

Conventional rings "Or-ring" assure the seal between the first element **140** of the piston **139** and the second chamber **133**, between the bushing **142** and the first chamber **132** and between the first element **140** of the piston and the bushing **142.**

The first element **140** of the piston **139** has a first surface or front surface **152** adapted to be exposed to the fluid in pressure present in the chamber **133** and a second surface or back surface **155** adapted to be exposed to the fluid in pressure present in the chamber **132** (assimilating for simplicity of the description to the first element **140** the rings "O-ring" of seal with the second chamber **133** and with the bushing **142**). The bushing **142** has a back surface **154** adapted to be exposed to the fluid in pressure present in the chamber **132** (still assimilating to the bushing **142** the ring "Or-ring" of seal with the first chamber **132**). According to a preferred embodiment, the back surface **154** of the bushing **142** adapted to be exposed to the fluid in pressure present in the chamber **132** is larger than the front surface **152** of the first element **140** of the piston, *i.e.* the surface adapted to be exposed to the fluid in pressure present in the chamber **133**, and the surface **152** is larger than the back surface **155** of the first element **140** of the piston **139.**

The body **131** is further provided with two feed holes of fluid in pressure, a first hole **145** placed in correspondence of the back of the first chamber **132**, a second hole **146** placed instead in correspondence of the front of the second chamber **133,** and a release hole **147** into the external environment (at atmospheric pressure) placed at the front of the first chamber **132**, near the shoulder **134**. In correspondence of the two input holes **145, 146** for the fluid in pressure pipe fittings **148**, **149** are provided for connecting the ducts **150, 151** of connection with the dorsal pipes **172, 171**, and therefore with the command unit 130.

The bushing **142** is dimensioned in such a way that, when it is in the position shown in Figures 5 and 6, between the external wall of the bushing and the inner wall of the chamber **133** a meatus is formed in fluid communication with the hole of release **147**.

The cylinder **131** can be made of aluminium or, to reduce the costs, it can be obtained by moulding of a plastic material, for instance acetal resin or other low-friction synthetic material that can be easily moulded, *i.e.* that allows to limit the moulding tolerances and has scarce deformation. The closure elements **135, 136** can be similarly realized by moulding of plastic material. The components of the piston **139** can be realized by moulding of plastic material or by turning of metallic bars. The stem **124** can be realized in metal.

The cylinder-piston assembly just described operates in the following way.

Let it be assumed that the cylinder-piston assembly is initially in the condition in which the stem **124** is in the position of maximum extension, shown in Figure 6. Introducing fluid in pressure only into the second chamber **133** through the hole **146**, the thrust exerted by the fluid in pressure against the front surface **152** of the first element **140** of the piston **139** causes the first element **140**, and therefore the stem **124**, to move back. While the first element **140** moves back, the bushing **142** slides on the first element **140**, but when the annular projection **144** thereof meets the bushing **142** this latter is dragged together with the first element **139** toward the back-of the cylinder, until the flanged end **153** of the bushing goes into abutment against the back closure element **135.** This stops the movement back of the piston **139** and of the stem **124** in their complex, that are in the position shown in Figure 4. It is to be observed that in the movement back of the first element **140** of the piston **139** the fluid present in the air space **156** between the external wall of the first element **140** and the inner wall of the chamber **133** frontally delimited by the annular projection **144** and, at the back, by the bushing **142** flows out through the meatus formed between the external wall of the bushing **142** and the inner wall of the chamber **133**, and is released into the external environment through the release hole **147**.

If, in the condition of Figure 4, fluid in pressure is introduced through the hole **145** into the first chamber **132**, supposing that the pressure of the fluid in the two chambers **132** and **133** is the same, the thrust exerted by the fluid present in the first chamber **132** on the back surface **154** of the bushing **142** exceeds the thrust exerted by the fluid in the second chamber **133** on the front surface **152** of the first element **140,** since the back surface **154** of the bushing **142** is larger than the front surface **152** of the first element **140.** This determines the advancement of the bushing **142** which, remaining in abutment against the annular projection **144** of the first element **140**, in its own movement of advancement drags the first element **140** and the stem **124**, until the annular projection **143** goes into abutment against the shoulder **134**. This determines the stop of the advancement movement of the piston **139** and of the stem **124** in their complex, the position reached being that shown in Figure 5. In the movement of advancement of the bushing **142**, the fluid present in the air space **157** between the external wall of the bushing and the inner wall of the chamber **132**, frontally delimited by the shoulder **134** and, at the back, by the annular projection **143**, is released into the external environment through the release hole **147.**

It is to be observed that the same result is achieved should the pressure of the fluid introduced into the first chamber **132** be higher than the pressure of the fluid introduced into the second chamber **133.** In such a case, it may even be unnecessary that the back surface **154** of the bushing **142** be larger than the front surface **152** of the first element **140** of the piston. In general, it will be sufficient that the pressure of the fluid introduced into the chamber **132** is higher than the product of the pressure of the fluid introduced into the chamber **133** by the ratio of the area of the front surface **152** of the first element **140** to the area of the back surface **154** of the bushing **142**. However, the above described surface sizing, allowing the employment of fluid at the same pressure in the two chambers of the cylinder, simplifies the structure of the command unit.

If now the fluid in pressure is again removed from the first chamber **132,** the piston **140** returns in the position of Figure 4. If the fluid in pressure is instead removed from the second chamber **133**, the thrust exerted by the fluid present in the chamber **132** on the back surface **155** of the first element **140** of the piston **139** determines the advancement thereof and therefore of the stem **124,** until the front surface **152** of the first element **140** goes into abutment against the seal ring **138**. This determines the stop of the movement of advancement of the stem, that is now in the position of maximum extension shown in Figure 6.

The cylinder-piston assembly **122** shown in Figures 4 to 6 has therefore three different operating positions, that correspond to three different amounts of extension of the stem **124**. Through the joint **125** and the transmission stem **126,** three different positions of the guides **119** are made to correspond to the three different amounts of extension of the stem **124.** The cylinder-piston assembly **122** is therefore adapted to the use as a positioner of lateral transport guides that have to take three different positions depending on the transported articles, as for instance the lateral guides **119** of the pneumatic conveyor of bottles shown in Figures 1, 2 and 3, which have to be able to take three different positions, depending on the capacity of the bottles to be transported.

If desired, it is possible to make the extreme positions taken by the guides **119** differ from those that would be determined by the three positions of the piston **139** previously described. This is simply obtained for instance by mounting on the stem **126** one or two bushings, shown in dash-and-dot line in Figure 2 and identified therein by **160**. In such a way, the two stops of the stem **126** are determined by the position of the bushings **160** along the stem **126**.

If the number of operating positions is more than three, for instance four, the cylinder-piston assembly can be modified so to have three chambers instead of the only two chambers **132, 133**, and providing a telescopic piston formed by three elements instead of the two elements **140, 142** only, *i.e.* with two coaxial bushings similar to the bushing **142**. By increasing the number of the chambers of the cylinder and of the elements of the telescopic piston, it is possible to increase the number of different positions for the transport guides.

Thanks to the present invention, the positioning of the lateral transport guides of the pneumatic conveyor of bottles results fast, easy and precise.

Should it be necessary to provide the conveyor with more pairs of lateral transport guides, placed at different heights, it would be enough to provide at different heights on every bar **17** as many clamps **121** and cylinder-piston assemblies **122** as the pairs of guides, or to provide further bars **17** on which to mount the single clamps **121** and cylinder-piston assemblies **122** for each guide.

Although described with reference to the positioning of the lateral guides in a pneumatic conveyor of plastics bottles, the present invention finds in general application within the positioning of guides in conveyors of any typology, for instance balt or chain conveyors.

For instance, always with reference to the pneumatic conveyor of Figures 1, 2 and 3, where there is the necessity of adjusting the position of the support guides **19** in dependence of different diameters of necks of the bottles,

## Claims

1. An actuator for the selective positioning of transport guides in conveyors, comprising a cylinder-piston assembly (**122**) actuated by a fluid in pressure with a stem (**124**) operatively coupled (**125,126,127,128**) to a transport guide (**119**) for the positioning thereof in dependence of the extension of the stem, **characterized in that** said cylinder-piston assembly comprises:
a cylinder (**131**) having at least a first and a second chambers (**132,133**) in axial succession;
means (**145,146**) of selective feed of fluid in pressure into the at least two chambers;
a telescopic piston (**139**) comprising a first piston element (**140**) integral with the stem and at least a second piston element (**142**) telescopically coupled to the first piston element,
and in which the first and second piston elements are jointly axially movable between a first position and a second position in presence of a first differential thrust exerted on the piston by the fluid in pressure in the first chamber with respect to the second chamber or vice versa, said first and second positions corresponding to a first and a second extensions of the stem, and
the first piston element is axially movable with respect to the second piston element between the second position and a third position in presence of a second differential thrust exerted on the piston by the fluid in pressure in the first chamber with respect to the second chamber or vice versa, said third position corresponding to a third extension of the stem.

2. The actuator according to claim 1, in which the second piston element has a surfaces (**154**) exposed to the fluid in pressure in the first chamber, and the first piston element has a first surface (**152**) exposed to the fluid in pressure in the second chamber and a second surface (**155**) exposed to the fluid in pressure in the first chamber, the exposed surface of the second piston element being larger than the first exposed surface of the first piston element, which is in turn larger than the second exposed surface of the first piston element.

3. The actuator according to claim 2, in which said first differential thrust is determined feeding fluid at the same pressure into the first and the second chambers, for the joint movement of the first and the second piston elements from the first position to the second position, or feeding fluid in pressure into the second chamber but not into the first chamber for the joint movement of the first and the second piston elements from the second to the first position.

4. Actuator according to claim 3, in which said second differential thrust is determined feeding fluid in pressure into the first chamber but not into the second chamber, for the movement of the first piston element from the second to the third position, or feeding fluid at the same pressure into the first and the second chambers for the movement of the first piston element from the third position to the second position.

5. The actuator according to claim 4, in which said first, second and third positions are defined by respective first, second and a third stop means (**134,135,138**).

6. The actuator according to claim 5, in which said second stop means include a shoulder between the first and. the second chambers.

7. The actuator according to claim 6, in which the first chamber has a larger diameter than the second chamber, the shoulder being defined by the difference of diameter between the first and the second chambers.

8. The actuators according to claim 7, in which the first piston element is mounted on the stem, and the second piston element is coaxial to the first piston element.

9. The actuator according to claim 8, in which the second piston element includes a first portion of diameter substantially correspondent to the diameter of the second chamber and a second portion (**143**) of diameter substantially correspondent to that of the first chamber, the second portion being adapted to the abutment against the shoulder to determine the stop in the second position.

10. The actuator according to claim 9, in which the first piston element includes a portion (**144**) of diameter substantially correspondent to the diameter of the second chamber and adapted to the abutment against an edge of the first portion of the second piston element for the stop of the movement from the third position to the second position.

11. The actuator according to any one of the preceding claims, further comprising a clamp (**121**) for fixing of the actuator to the conveyor, said cylinder-piston assembly being coupled to the clamp through an articulated joint.

12. The actuator according to claim 11, in which the stem of the cylinder-piston assembly is associated with the transport guide through a transmission stem (**126**), the clamp comprising a sleeve (**127**) for guiding the transmission stem.

13. A conveyor of articles comprising at least a transport guide (**119**) for guiding the articles along a transport path and means (**118**) of selective positioning of the transport guide depending on the spatial conformation of the transported articles, **characterized in that** said means of selective positioning comprise at least one actuator in accordance to any one of the preceding claims.

14. The conveyor according to claim 13, comprising a plurality of said actuators arranged along the transport path, and at least a command unit (**130**) of the plurality of actuators.

15. A pneumatic conveyor of plastic bottles comprising means (**10,11,12,17,19**) for the pneumatic transport in suspension of the bottles (113) along a transport path, at least a pair of transport guides (**119**) for maintaining the bottles in substantially vertical position in the movement along the transport path and means (**118**) for the selective positioning of the pair of transport guides, **characterized in that** said means of selective positioning comprises, for each guide of the pair of transport guides, a plurality of actuators according to any one of claims from 1 to 12.

16. The pneumatic conveyor according to claim 15, in which the means of pneumatic transport in suspension of the bottles include a pair of support guides (**19**) for a suspension ring (**114**) provided on the neck of the bottles, means (**118a**) being provided for the selective positioning of the pair of support guides comprising at least one actuator according to any one of claims 1 to 12.
